Europäisches Patentamt

European Patent Office

Office européen des brevets

(11) Veröffentlichungsnummer: **0 324 873**
**A1**

## (12) EUROPÄISCHE PATENTANMELDUNG

(21) Anmeldenummer: **88100757.9**

(22) Anmeldetag: **20.01.88**

(51) Int. Cl.4: **B60N 1/06**

(43) Veröffentlichungstag der Anmeldung:
**26.07.89 Patentblatt 89/30**

(84) Benannte Vertragsstaaten:
**AT BE CH ES FR GB GR IT LI LU NL SE**

(71) Anmelder: **Graumann, Paul**
**Riemke 29**
**D-5870 Hemer(DE)**

(72) Erfinder: **Graumann, Paul**
**Riemke 29**
**D-5870 Hemer(DE)**

(54) **Vertikal verschiebbare Rückenstütze für Autositze.**

(57) Vertikal verschiebbare Rückenstütze für Autositze, die aus zwei vertikal gegeneinander verschiebbare Hälften besteht. Während die rückwärtige Hälfte fest mit der Rückenlehne des Fahrersitzes verbunden ist, bleibt die Vorderhälfte vertikal verschiebbar und kann eine vertikale Verschiebefunktion des Fahrerrückens mitmachen. Beispielsweise, wenn der Fahrer in das Sitzpolster einfedert.

Der feste und/oder der lose Teil der Rückenstütze besitzen vertikale Führungselemente, die mit dem anderen Teil schlüssig passen und eine vertikale Verschiebefunktion garantieren.

Zwei gegeneinander wirkende Federn halten den losen Teil dabei in einer Mittelstellung, so, daß sich der lose Teil gegen die Federn in vertikale Richtung nach oben und unten bewegen läßt.

EP 0 324 873 A1

## Vertikal verschiebbare Rückenstütze für Autositze.

Es ist bekannt, daß Rückenstützen für Autositze als Zubehör nachträglich an Autositze lösbar befestigt werden können.

Es ist bekannt, daß dadurch eine individuelle anatomisch geformte Rückenstütze möglich wird, unabhängig von der Raumform der Rückenlehne.

Es ist bekannt, daß Rückenlehnen von Autositzen Verstellmöglichkeiten bieten, durch die die Form der Rückenlehnen der Anatomie des jeweiligen Fahrers angepaßt werden kann.

Es ist bekannt, daß Sitzflächen und Rückenlehnen von Autositzen zwar verstellt werden können, sie aber außerhalb dieser Verstellmöglichkeit unabhängig voneinander starr befestigt sind.

Es ist bekannt, daß sich das Federverhalten der Sitzflächen-Polsterung und das Federverhalten der Rückenlehnen-Polsterung unabhängig voneinander vollziehen.

Es ist bekannt, daß die Konstruktion der Sitzflächen ein Federverhalten der Sitzflächen vornehmlich in vertikaler Richtung ermöglicht.

Es ist bekannt, daß die Konstruktion der Rückenlehnen ein Federnverhalten der Anlageflächen des Rückens vornehmlich in horizontaler Richtung ermöglicht.

Es ist bekannt, daß sich der Körper eines Autofahrers im Bereich der Sitzfläche entsprechend dem Federverhalten der Sitzflächenpolsterung vertikal bewegt.

Es ist durch Messungen festgestellt, daß die Vertikalbewegung des Fahrers im Sitzbereich nicht von der Polsterung der Rückenlehne mitgemacht wird und sich der Körper des Fahrers nicht in seiner Gesamtheit entsprechend der vertikalen Bewegung im Sitzbereich bewegt.

Es ist durch empirische Messungen festgestellt, daß lediglich 15 % der vertikalen Wegstrecke aus der Bewegung im Sitzbereich, als vertikale Bewegung in Höhe der Schulterblätter feststellbar ist.

Es ist durch Messungen festgestellt worden, daß die meßbaren Bewegungen im oberen Körperbereich von mehr als 1 mm aus Bewegungen im Beckenbereich herrühren, die länger sind als 4,5 mm.

Es ist durch empirische Messungen bekannt, daß vertikale Bewegungen im Sitzbereich vornehmlich vom Körper des Fahrers aufgefangen werden.

Es ist bekannt, daß diese Vertikalbewegungen vornehmlich die unteren Wirbel des Stützapparates bis zum Bereich der Lendenwirbel belastet.

Es ist bekannt, daß die Vertikalbewegung des Autofahrers im Sitzbereich nicht von der Polsterung der Rückenlehne mitgemacht wird.

Es ist bekannt, daß der Körper eines Fahrers, wenn er die Vertikalbewegung der Sitzpolsterung in seiner Gesamtheit mitmacht, weniger Vertikalbewegung innerhalb seines Körpers liminieren muß.

Aufgabe der Erfindung ist es, Autofahrern eine Rückenstütze zu ermöglichen, die sowohl ihren anatomischen Anforderungen genügt und gleichzeitig eine vertikale Bewegung des gesamten Körpers unterstützt.

Aufgabe der Erfindung ist es insbesondere, zu verhindern, daß vertikale Bewegungen des Körpers, die aus dem Federverhalten der Sitzflächen herrühren, weiterhin vom Körper des Fahrers absorbiert werden müssen.

Aufgabe der Erfindung ist es, den Rücken des Fahrers in seiner vollen Länge so zu stützen, als sei die Auflage der Rückenstütze Bestandteil der Kleidung und ein Widerstand gegen vertikale Verschiebung des gesamten Rückens sei nicht vorhanden.

Aufgabe der Erfindung ist es, die Wirbelsäule des Fahrers während der Fahrt so zu entlasten, daß die Wirbel im unteren Körperbereich nicht durch die Vertikale Federbewegung der Sitzfläche gestaucht und gereckt werden, so, als sei die vertikale Federbewegung der Sitzfläche nicht vorhanden.

Aufgabe der Erfindung ist es, Wirbelsäulenschäden bei Autofahrern zu verhindern bzw zu verringern.

Gegenstand der Erfindung ist eine vertikal verschiebbare Rückenstütze für Autositze, die sich mit der dem Fahrer zugewandten Seite V in ihrer Gesamtheit vertikal in Richtung O und U verschieben läßt, indem sie aus zwei gegeneinander verschiebbaren Hälften besteht, von der die, dem Fahrer abgewandten Seite H mit der Rückenlehne des Fahrersitzes fest verbunden wird.

Dergestalt, daß der fest oder der lose Teile vertikale Führungselemente besitzt, die mit dem anderen Teil schlüssig passen und eine vertikale Verschiebefunktion garantieren.

Dergestalt, daß der lose Teile der Rückenstütze von 2 gegeneinander wirkenden Federn in vertikaler Richtung in einer Mittelstellung gehalten wird, dergestalt, daß die lose Hälfte der Rückenstütze gegen die Federn von dieser Mittelstellung nach oben und unten vertikal bewegt werden kann, dergestalt, daß sich die vertikal verschiebbare Hälfte der Rückenstütze so in ihrer Raumform und in ihrer Bewegung dem Körper des Fahrers anpaßt, als sei sie Bestandteil der Kleidung.

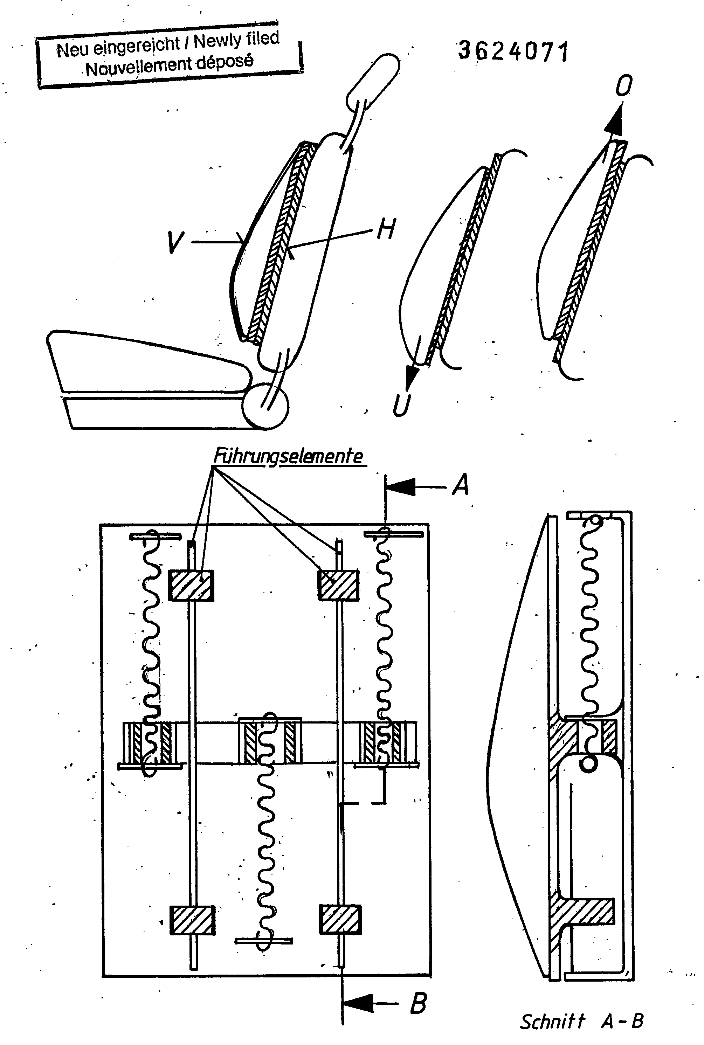

## Ansprüche

Vertikal verschiebbare Rückenstütze für Autositze dadurch gekennzeichnet, daß sie aus zwei vertikal gegeneinander verschiebbaren Hälften besteht, von der die dem Fahrer zugewandten Seite von 2 Federelementen in der Mitte gehalten wird und sich durch die Anlage des Körpers des Fahrers nach Belieben nach oben und unten vertikal geführt, bewegen läßt, während der Teil dem Fahrer abgewandten Spite mit der Rückenlehne fest oder lösbar verbunden ist

nach 1 dadurch gekennzeichnet, daß der vertikal verschiebbare, dem Fahrer zugewandten Teil den anatomischen Erfordernissen des jeweiligen Fahrers nach Belieben angepaßt werden kann, ohne, daß sich die Anatomie des Körpers bei vertikaler Bewegung verändern muß.

36 24 071
B 60 N 1/06
17. Juli 1986
ag: 21. Januar 1988

*Paul Graumann*

3624071

O

V — H

U

Führungselemente

A

B

Schnitt A - B

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WO-A-8 500 029 (NEVE) <br> * Seite 2, Zeile 28 - Seite 5, Zeile 25; Figuren * <br> --- | 1 | B 60 N 1/06 |
| X | US-A-1 711 320 (LINDER) <br> * Seite 1, Zeile 27 - Seite 2, Zeile 25; Figuren * <br> --- | 1,2 | |
| X | DE-B-1 111 965 (RAUSCHE) <br> * Spalte 2, Zeile 45 - Spalte 4, Zeile 13; Figuren * <br> --- | 1,2 | |
| X | FR-E- 87 015 (CACCIVIO) <br> * Seite 1, rechte Spalte, Zeile 22 - Seite 2, linke Spalte, Zeile 51; Figuren * <br> --- | 1 | |
| X | EP-A-0 179 516 (NEVE) <br> * Seite 2, Zeile 28 - Seite 5, Zeile 28; Figuren * | 1 | |
| A | --- | 2 | RECHERCHIERTE SACHGEBIETE (Int. Cl.4) |
| X | DE-A-1 580 623 (RECARO) <br> * Seite 20, Zeile 31 - Seite 21, Zeile 18; Figuren * <br> ------ | 1 | A 47 C 7/00 <br> B 60 N 1/00 <br> B 61 D 33/00 |

Der vorliegende Recherchenbericht wurde für alle Patentansprüche erstellt

| Recherchenort | Abschlußdatum der Recherche | Prüfer |
|---|---|---|
| DEN HAAG | 20-09-1988 | HORVATH R.C. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument